Europäisches Patentamt

(19) European Patent Office

Office européen des brevets

(11) Publication number: **0 344 013**
A1

# (12) EUROPEAN PATENT APPLICATION

(21) Application number: **89305366.0**

(22) Date of filing: **26.05.89**

(51) Int. Cl.4: **C 04 B 41/61**
**C 04 B 41/71, C 04 B 16/00**

(30) Priority: **27.05.88 US 199974**

(43) Date of publication of application:
**29.11.89 Bulletin 89/48**

(84) Designated Contracting States:
**AT BE CH DE ES FR GB GR IT LI LU NL SE**

(71) Applicant: **UNIVERSITY OF DAYTON**
**300 College Park Avenue**
**Dayton Ohio 45469 (US)**

(72) Inventor: **Salyer, Ival O.**
**6325 Shady Knoll Drive**
**Dayton Ohio 45414 (US)**

(74) Representative: **Bankes, Stephen Charles Digby et al**
**BARON & WARREN 18 South End Kensington**
**London W8 5BU (GB)**

(54) **Method of manufacturing phase change, flame retarding, cementitious composite materials and composites made thereby.**

(57) Method for forming flame retarding, phase change cementitious composite structures and composites produced thereby. The composite matrix is immersed or coated with a bath of liquid phase change material simultaneously or sequentially followed by immersion or coating of the PCM laden composite with a flame retarding agent or agents.

EP 0 344 013 A1

**Description**

# METHOD OF MANUFACTURING PHASE CHANGE, FLAME RETARDING, CEMENTITIOUS COMPOSITE MATERIALS AND COMPOSITES MADE THEREBY

The present invention relates to a composite such as a pellet, fiber, or sheet useful in thermal energy storage and, more particularly, to a pellet, fiber or sheet formed from a polyolefin and having a phase change material therein.

A great deal of interest exists in phase change thermal energy storage systems because of their inherent ability to store, absorb and release large quantities of heat to their surrounding environment as temperatures drop below or exceed predetermined levels. These systems are of particular interest in the architectural and building trades where climate control and its concomitant energy consumption is one of the principal considerations in building design and material selection.

A variety of building materials and techniques, including structural elements which incorporate phase change materials, have previously been used to conserve heat or cool and thereby reduce energy costs. For into concrete such that energy in excess of that necessary to obtain comfort conditions is inherently absorbed and released, as required to maintain the comfort range. Thus, in the winter months, phase change materials incorporated into the concrete walls or floors of buildings absorb and store solar energy during daylight hours and release it to the interior at night as temperatures decrease. In the summer months, the same phase change materials, due to their thermostatic character, conserve coolness by absorbing cool from the night air and releasing it during the day.

Concrete materials incorporating phase change materials are more desirable than elements which store only sensible heat because they have a higher capacity to store energy, plus they absorb and release a large quantity of energy over a very narrow temperature range.

A phase change material utilizes its latent heat of fusion for thermal storage. The latent heat of fusion is substantially greater than the sensible heat capacity of the material. Stated differently, the amount of energy which a material absorbs upon melting, or releases upon freezing, is much greater than the amount of energy which it absorbs or releases upon increasing or decreasing in temperature 1°C. Upon melting and freezing, per unit weight, a phase change material absorbs and releases substantially more energy than a sensible heat storage material which is heated or cooled to the same temperature range. In contrast to a sensible heat storage material which absorbs and releases energy essentially uniformly over a broad temperature range, a phase change material absorbs and releases a large quantity of energy in the vicinity of its melting/freezing point. In addition to their latent storage capacity, the phase change materials also store and release sensible energy as well. Thus, the latent storage in phase change materials is always augmented to a significant extent by their sensible storage capacity. This advantage is put to good use in buildings where space is at a premium and energy storage and release are required within a very narrow comfort range.

It has long been recognized that an effective phase change material, which could store and release thermal energy within the temperature range of 10-65°C, and could be economically incorporated into concrete, would have broad utility for many heating and cooling applications including solar passive, bridge deck deicing, etc.

Widespread use of the direct incorporation of phase change materials into concrete has not been achieved because the phase change material adversely affects the physical properties of the concrete. Direct incorporation of phase change materials into concrete reduces the strength properties. Thus, the degree of concrete crosslinking required to achieve optimum physical properties is not obtained in the direct presence of the heat phase change material.

It has been suggested to encapsulate phase change materials in pellets for incorporation into concrete and the like. U.S. Patent 4,504,402 to Chen teaches an encapsulated phase change material which is prepared by forming a shell about a phase change composition in compacted powder form. These pellets, however, are comparatively expensive to manufacture.

The present invention is directed to a composite useful in thermal energy storage. The composite is formed from a crosslinked or uncrosslinked polyolefin having a phase change material such as a crystalline alkyl hydrocarbon incorporated therein. The polyolefin is preferably crosslinked polyethylene and more preferably crosslinked high density polyethylene, although, low density polyethylenes, polypropylenes, polybutenes, etc. are also useful.

The composites of the present invention are useful in a variety of applications. The composites of the present invention can also be used in a thermal storage device where they contact a thermal transfer fluid such as water, air, etc. In accordance with one embodiment of the invention, the composite is a pellet. Such pellets are suitable for incorporation into concrete in building materials and the like (particularly gypsum board) or can be placed in the walls or crawl spaces within a building to conserve heat or cool. In addition to concrete structures, composites can also be incorporated into the structure of various foams such as polyurethane foams, polystyrene foams, etc. by premixing with the polymer before foaming.

The composites of the present invention can also be molded into various bodies having advantageous thermal storage characteristics. In accordance with another embodiment, the composite is a sheet or film material useful as a wall or floor covering. Alternatively, the composite may be a molded body such as a floor tile, a wall tile. They can also be used to form bodies which may be placed into hot or cold beverages where they will maintain the desired beverage temperature.

In still another embodiment, fiber or Strand composites can be used to form woven or non-woven insulative fabrics, sheets, mats and the like for clothing, carpet, curtains, etc.

The composite of the present invention is thermally form stable. Form stability is achieved by selection of appropriate polyolefins and/or controlling the degree of crosslinking. The polyolefin is preferably crosslinked to such a degree that the pellet maintains its shape (form stability) upon heating to temperatures above the crystalline melting point of the polyolefin and, at the same time, is capable of absorbing at least 10% by weight, and, preferably, at least 50% by weight, of the phase change material.

Another embodiment of the present invention resides in a thermal storage material comprising a cementitious matrix having thermally form stable pellets containing a phase change material dispersed therein, wherein said pellets are formed from a polyolefin containing a phase change material.

In a particularly preferred embodiment, the phase change material in the composite is a crystalline alkyl hydrocarbon which is comprised of one or more crystalline straight chain alkyl hydrocarbons having 14 or more carbon atoms and heats of fusion greater than 30 cal/g. The melting and freezing point of the alkyl hydrocarbon is in the range of 0 to 80°C, preferably 5 to 50#C, and most preferably, 18 to 33°C.

Another embodiment of the present invention is a process for forming a thermally form stable composite which comprises incorporating a phase change material into a polyolefin matrix material. In a preferred embodiment of the invention, the composite is formed by immersing a polyolefin body (e.g., a pellet, sheet or fiber), which is preferably crosslinked, into a hot melt of the phase change material which is preferably heated to a temperature above the melting point of the polyolefin. In the most preferred embodiment, the polyolefin is crosslinked high density polyethylene and the phase change material is a crystalline alkyl hydrocarbon.

Representative examples of polyolefins which are useful in the present invention are crystalline polyolefins such as polyethylene, polypropylene, polybutene, crystalline polystyrene, crystalline chlorinated polyethylene and poly(4-methylpentene-1). Crystalline ethylene copolymers such as ethylene vinylacetate, crystalline ethylene acrylate copolymers, ionomers, crystalline ethylene-butene-1 copolymers and crystalline ethylene-propylene copolymers are also useful polyolefins. Preferably, the polyolefins are crosslinked such that they are form stable upon heating above their crystalline melting point.

In accordance with certain embodiments of the invention, the composites of the present invention may be formed by the use of commercially available high density or low density polythylene as the starting component. The term "high density polyethylene" is used herein as it is used in the art, i.e., to refer to polyethylene ranging in density from about 0.940 to about 0.970 g/cc. The term "low density polyethylene" refers to polyethylenes ranging in density from 0.910 to 0.940 g/cc and includes low density polyethylene obtained by the high pressure process and linear low density polyethylene. Lower density polyethylenes form softer, more rubbery composites with the crystalline alkyl hydrocarbons and may be less desirable in some applications due to their lower compressive strength.

Pellet composites can be formed from commercially available high density polyethylene pellets such as Alathon 7040 and Alathon 7050, available from E.I. DuPont; Marlex 6006, available from Phillips Petroleum Co.; LS-556 from U.S. Industrial Chemicals Co.; and, Gulf pellets 9606 available from Gulf Oil Co. with or without crosslinking.

The size of the pellet composites of the present invention is not limited. It may range from about 1 micron to 5 mm in their largest dimension, and preferably range from about 0.5 to 3.0 mm. While various shapes may be used, the pellets are typically spherically or cylindrically shaped, although elongated particles, cubes, monofilaments or fibers can also be used.

The sheets useful as wall or floor coverings in the present invention, are typically about 1.5 to 6.0 mm thick. The fibers may vary widely in their length to ratio depending on the end use.

In some cases, it is not necessary to crosslink the polyolefin to achieve thermal form stability. In some cases, the uncrosslinked polyolefin exhibits sufficient thermal form stability for the intended use. For example, HDPE can be heated above its cloud point and the phase chnage material can be dissolved therein. This product can be allowed to solidify and then ground to form an uncrosslinked pellet in accordance with the present invention. In another embodiment, the product can be extended and cut into pellets. In most applications, it is desirable to crosslink the polyolefin to increase form stability. Crosslinking is also desirable because it reduces tack. In this manner, composites such as pellets can be used in a bed through which a heat exchange fluid readily passes.

Various methods of crosslinking polyolefins are known. Gamma and electron beam radiation are the most convenient, and the preferred methods for crosslinking polyethylenes. Polyethylenes may also be chemically crosslinked with silane or peroxide as discussed and amplified below. Polypropylenes and polybutenes can be crosslinked with silanes as described later.

It is essential that the degree of crosslinking is controlled such that the polyolefin is thermally form stable. If the composites are not sufficiently crosslinked, they may partially fuse together or dissolve during the heating process to imbibe the phase change material or later upon heating in a thermal energy storage device. At the same time, pellets, sheets, fibers and similar composites cannot be so heavily crosslinked that they do not absorb sufficient phase change material. Thus, in crosslinking, a balance exists between thermal form stability and capacity for phase change material. A degree of crosslinking should be selected which provides the most desirable balance of these two properties, i.e., thermal form stability with a high capacity for the phase change material.

The term "thermal form stability" in its broadest sense means that the composite is thermal form stable in its intended use. Thus, in incorporating the phase change material and in using the composite, the composite does not melt or agglomerate to such an extent that the pellet is not useful. For certain polymers form stability at lower temperatures (e.g., 100°C) will be suitable whereas for other uses form stability at higher temperatures (e.g., 180°C) will be required.

In accordance with the most preferred embodiments of the invention the polyolefin is a crosslinked polyolefin which retains its shape upon heating to temperatures above its crystalline melting point. This is important because it permits maximum imbibition of the phase change material. It has been found that substantially greater amounts of the phase change material (up to 85% based on the weight of the composite) can be incorporated into the composite when the polyolefin is heated above its melting point. This requires that the polyolefin be form stable at these temperatures. If the polyolefin is not form stable at these temperatures and lower temperatures are used, relatively low amounts (e.g., 10%) are incorporated into the pellet.

The composite may be examined for thermal form stability by placing a sample of it in refluxing phase change material at 50-185°C and observing it for adhesion. Preferably, the composite is essentially free of adhesion or tack at temperatures up to at least about 50°C.

The electron beam or gamma radiation dose used for crosslinking polyethylene, is typically in the range of about 2-12 megarads, and preferably, abot 6-10 megarads. The amount of irradiation must be adjusted within the aforementioned ranges for the particular pellet or sheet used. The irradiation dosage within the above ranges does not appear to have a significant effect on the melting point of the polyethylene, but it clearly affects its capacity to absorb phase change material and its thermal form stability. Gamma irradiation crosslinking is carried out in an inert atmosphere or under vacuum. A nitrogen atmosphere is preferred.

When Alathon 7040 pellets receive a total dosage of 2-4 megarads, they fuse into a single mass within 2.5 hours at 145 to 165°C in refluxing ethylene glycol and are not suitable as a thermal energy storage medium. At 6 megarads, they may adhere together after 72 hours, but the mass is easily crumbled and the pellets are useful as a phase change material. With exposure of 8 megarads or more, the pellets remain free flowing. Similar results are obtained with Marlex 6006 pellets although pellets receiving 8 megarads exposure adhere at their points of contact after 3 hours at 165°C in refluxing ethylene glycol. USI LS-630 pellets require 10-12 megarad dosages before they are sufficiently thermal form stable to be useful as a storage medium. Gulf Oil 9606 pellets adhere slightly after 96 hours at 165°C when exposed to 4 megarad levels, but remain essentially free flowing at 8 megarad levels and above.

The preferred crosslinked, high density polyethylene forming the composites of the present invention can also be characterized by a gel content of at least 10%, and more preferably, at least 30%. Resistance to melt flow or thermal flow stability is related to the gel content of the crosslinked material. The final gel content varies with the high density polyethylene used; depending on the product, gel contents of 30-50% and up to 90% may be achieved.

The capacity of the polyolefin to absorb the phase change material is equally as important as its thermal form stability and must also be considered in selecting the optimum crosslinking dosage. For example, these materials may be crosslinked to a state in which they are thermally form stable, but they are not desirable for thermal energy storage due to their low capacity for the phase change material. In accordance with the present invention, the degree of crosslinking is controlled such that the polyolefin is capable of absorbing at least 10% by weight phase change material, and preferably, at least 50% by weight. Of course, in some cases, crosslinking the polyolefin may be unnecessary.

When an electron beam is used to crosslink, the desired irradiation dosage can be achieved with various combinations of electron beam voltage and beam current. In the case of polyethylenes, these conditions should be in the ranges of greater than about 500,000 volts and about 3-33 milliamps to uniformly crosslink the composites and achieve the desired thermal form stability and capacity for phase change material. Usually, the maximum beam potential available is used which is typically 3-5 million volts. If the potential is in excess of 10 million volts, residual radiation becomes a factor. Hence, the beam potentials useful in the present invention range from about 500,000 to 10 million volts.

In irradiation crosslinking pellets, the depth of the pellet bed and the bed velocity passing across the electron beam must be adjusted to ensure the pellets receive the aforesaid radiation dose. In the case of an extruded sheet, the velocity of the sheet primarily determines the radiation dose when the thickness of the sheet does not exceed that at which entry and exit potentials are equal.

Radiation dose can be expressed by the equation:

$$D = 36 \; F_i \; F_e \; IV/[t \; A/T]$$

where $F_i$ and $F_e$ are the beam current and beam energy efficiencies; $I$ is the beam current; $V$ is the beam potential; $t$ is the bed depth in $g/cm^2$; and $A/T$ is the area thruput in $cm^2/hr$. Hence, to deliver a predetermined dosage $D$, the thickness of the pellet bed or extruded sheet is a function of the beam potential and the area thruput is a function of the beam current. The above equation can be rewritten:

$$D = 360 \; F_i \; F_e \; P/(M/T)$$

by replacing IV with the power of the beam in kilowatts and t A with the mass of the bed or sheet in kilograms thereby illustrating that the mass thruput M/T is a function of beam power.

At potentials on the order of 500,000 volts, the maximum permissible pellet bed depth is about 0.30 cm. At potentials nearing 5 million volts, the bed depth can be up to 1.25 cm. At these voltages and bed depths, equal entrance and exit energy is achieved and the pellets are uniformly penetrated by the electron beam. Similar

4

voltages can be used to process sheets. While it is not necessarily essential to have uniform crosslinking, it is generally desirable. Non-uniformly crosslinked pellets, for example, pellets having a higher degree of crosslinking in the shell than the core, are useful in many applications.

The velocity with which a pellet bed or an extruded sheet can be passed through the electron beam is a function of the beam current. At higher currents within the aforementioned range, higher velocities can be used. Thus, to maximize the rate of production, it is desirable to select the maximum amperage available for the electron beam. In this manner, the pellets or sheets can be processed most efficiently. In some cases, it may be to use multiple passes through the electron beam, for example, where the electron beam is unable to deliver the amperage needed to deliver the requisite radiation dosage in one pass.

In crosslinking pellets, by adjusting the bed depth for the beam potential, equal entrance and exit energies are achieved and it is unnecessary to agitate the pellet bed to achieve uniform crosslinking. Such agitation may be desirable if higher bed depths are used and procesed by multiple passes. In such cases, the bed may be agitated by stirring between passes. This technique may be used when processing large quantities although it is preferable to limit the bed depths as above such that irradiation can be conducted in one pass without agitation.

Irradiation in an oxygen containing atmosphere, such as air, is accompanied by the production of ozone which can lead to some surface oxidation. While this occurrence has not been found to be particularly troublesome, it can be avoided by conducting irradiation in an oxygen-free environment, such as a vacuum, nitrogen, carbon dioxide, or similar inert gases. It is not clear that the effects of surface oxidation justify the additional expense of using inert atmospheres, but an improvement in the thermal form stability has been observed in this manner.

A typical example of the irradiation conditions used to crosslink Alathon 7040 pellets is:

Voltage: 3 million volts
Current: 33 milliamps
Pellet Bed Depth: 0.25 to 0.5 inch
Bed Velocity: 16 feet per minute
Atmosphere: air
Passes: 1
Doses: 6 megarads

An example of irradiation conditions for the same pellets using multiple passes is:

Voltage: 3 million volts
Current: 20 milliamps
Total Dosage: 8 megarads
Dosage Per Pass: 2 megarads
Passes: 4
Agitation: stirred after each pass
Atmosphere: air

Pellets and sheets can be also be easily crosslinked through gamma radiation. Dosages in the range of about 4 to 12 megarads may be used. Irradiation is preferably carried out in an inert atmosphere such as nitrogen, helium, hydrogen or a vacuum. It may also be carried out in air, but requires significantly higher total doses than in an inert atmosphere. A nitrogen atmosphere is the lowest cost and therefore, the preferred irradiation atmosphere.

Chemical crosslinking is also feasible and desirable for some polyolefins. Various chemical crosslinking reactions may be used but two which are particularly useful are silane graft crosslinking and peroxide crosslinking.

U.S. Patent 4,182,398, and 3,646,155 disclose several methods for chemical crosslinking high density polyethylene which can also be used to crosslink other polyolefins, and particularly, polypropylenes. Under the silane-grafted method, a polyolefin is charged to a Banbury with an unsaturated silane such as vinyl triethoxy silane and a free radical initiator such as benzoyl peroxide and mixed to produce a silane-grafted polyolefin which is then mixed with a catalyst such as dibutyl tin dilaurate and crosslinked by heating in boiling water or steam and then air dried.

In a perioxide method, which is only useful with polyethylene, the powder may be dry blended with dicumyl peroxide, di-t-butyl peroxide, 2,5-dimethyl-2,5-bis(t-butylperoxy)hexane, 2,5-dimethyl-2,5-bis(t-butylperoxy)hexyne 3 or a similar high temperature free radical generating agent and melt extruded at about 150 to 200°C, and preferably, about 175°C, to crosslink the polyolefin. In another method, polyethylene powder such as HDPE powder is melted on a mill, and as soon as a smooth sheet of polyethylene is formed, dicumyl peroxide may be added. Dicumyl peroxide is usually reacted in an amount of about 0.1 to 5% by weight, and preferably, about 1% by weight.

The above methods provide crosslinked polyolefin bodies which can be used in the manufacture of floor or wall coverings or which can be cut into pellets or spun or drawn into fibers. The crosslinked pellets, sheets, or fibers can be impregnated with a phase change material to obtain products in accordance with the present invention.

Processes such as compression or injection molding can also be used to form the pellets, but they tend to be less economical. They are however, useful in forming floor or wall coverings. In accordance with this embodiment of the invention, sheets, tiles, or the like are formed by compression or injection molding and crosslinked simultaneously or afterward by electron beam or gamma radiation as described above.

To make fibers, the polyolefin may be melt spun, drawn or extruded. Then, the fiber is immersed in a melt of the phase change material. Where a crosslinked fiber is desired, a silane grafted polyolefin may be coextruded with a polyolefin composition containing a condensation catalyst to produce a composition which can be spun and drawn. The fiber is immersed in a water bath or treated with steam to crosslink it and then immersed in a melt of the phase change material.

The phase change material is preferably incorporated into the polyolefin body by immersing the polyolefin body (e.g., sheet, pellet, fiber, etc.) into a bath of melted phase change material. The temperature of the phase change material should be higher than the crystalline melt point of the polyolefin to imbibe the maximum amount of the phase change material. The polyolefin body is retained in the bath until at least about 10% by weight of the straight chain alkyl hydrocarbon is absorbed. Absorption of about 40 to 80% by weight of the phase change material is preferred in the case of the pellets. The time/temperature required to achieve this capacity of phase change material will depend on the nature of the polyolefin, for example, the type of polyolefin and the degree of crosslinking. This degree of absorption is achieved by allowing pellets to remain in a melt of phase change material for up to 1 to 2 hours at about 150 to 185°C.

The crosslinked crystalline polyolefin/PCM composite of the present invention can also be in the form of a molded article such as a flower pot or beverage container. The crosslinked polyolefin body in the basic form of a flower pot or beverage container is immersed into a vat of melted phase change material in order to incorporate the phase change material into the polyolefin body. Typically, potted plants are kept in environments wherein the temperature is maintained at a higher level during daytime or working hours than during evening or non-working hours. By forming the flower pot from the composite of the present invention, the phase change material absorbs large amounts of heat during the higher temperature periods and releases it to the soil, and thus, to the plant during the lower temperature periods. As such, the soil and the plant are kept at a more constant temperature. Plants, which have been kept in pots formed from the composite of the present invention, have been found to flourish in this environment.

The pellets of the present invention can also be mixed directly with the soil to prevent frost.

A beverage container formed from the composite of the present invention maintans the temperature of a liquid therein.

Other methods for incorporating the phase change material into the polyolefin can also be used. The phase change material can be directly mixed with the uncrosslinked polyolefin or the two materials can be blended and hot melt extruded but generally lesser amounts of phase change material can be incorporated in this process.

Various phase change materials are useful in the present invention. Substantially any phase change material can be used which is compatible with the polyolefin. In most cases, compatible phase change materials will be characterized by a long alkyl chain within their molecular structure. Preferred phase change materials are crystalline organic compounds such as crystalline alkyl hydrocarbons, crystalline fatty acids, crystalline fatty acid esters, crystalline alicyclic hydrocarbons, and crystalline aromatic hydrocarbons which melt and freeze within the desired thermal transfer temperature range (e.g., 0 to 80°C).

A number of commercially available waxes are useful as phase change materials in the present invention including Shellwax 100 (MP 42-44°C), Shellwax 120 (MP 44-47°C), Shellwax 200 (MP 52-55°C), Shellwax 300 (MP 60-65°C) all of which are products of Shell Oil Co.; Boron R-152 (MP 65°C) a product of Standard Oil of Ohio (SOHIO); Union SR-143 (MP about 61°C) a product of Union Oil Co.; Witco 128 (MP about 53°C) Witco LLN, Witco 45A, Witco K-61, Witco K-51, and Witco 85010-1 all products of Witco Corporation (Kendall Division); Aristowax 143 (MP 34-61°C), and Paraffin 150 (MP about 61°C). These waxes have heats of fusion greater than 30 cal/g and by comparison to other phase change materials, they are inexpensive. Many of them cost as little as 15¢ (U.S.) per pound when purchased in a tank car quantity. A secondary solid state transition has been observed in many waxes. Generally it is observed in odd carbon number waxes of C-9 and greater and in even number waxes of C-24 and greater. As the carbon numbers increase, the secondary transition decreases until it finally disappears.

A preferred group of waxes for use in the present invention are commercially available mixtures of crystalline alkyl hydrocarbons which melt in the range of 10 to 50°C. Mixtures of alkyl hydrocarbons are obtained at low cost as by-products of petroleum refining. Typically these are blends of alkyl hydrocarbons which differ by no more than 4 or 5 carbon atoms. A typical example is Witco 45A which contains about 21% C-18, 33% C-19, 26% C-20, 11% C-21 hydrocarbon, and the balance higher and lower hydrocarbons. Because they are inexpensive, they can be incorporated into building materials at minimal additional expense and, at the same time, provide high savings in terms of reduced energy costs.

While these waxes are mixtures they exhibit one melting freezing point which is the average of the melting freezing points of the constituents. The preferred blends for passive heating and cooling have a melting and freezing point in the range of 24 to 33°C (as explained below, the melting and freezing point are preferably the same). Preferred blends for passive cool storage have a melting and a freezing point in the range of 18 to 33°C. In many applications, the blends will be relied upon for both heating and cooling and will be characterized by both the melting and a freezing point in the range of 20 to 25°C.

Ultra pure alkyl hydrocarbons C-16 to C-22 and higher are also available at a premium cost that may have higher heats of fusion and crystallization (e.g., 55-60 cal/g) than the low-cost mixtures described above. These ultra pure alkyl hydrocarbons are also useful in the present invention for critical applications requiring maximum storage capacity in the minimum volume of space.

Another consideration in the selection of waxes used in the present invention is the difference between the melting and freezing points. The alkyl hdyrocarbons are self-nucleating and thus melt and freeze congruently. Thus,when heated or cooled at rates of 2°C/min. or less, the melting and freezing temperatures substantially coincide.

In addition to providing blends of alkyl hydrocarbons which exhibit phase change characteristics which are intermediate or approximately the average of the individual phase change materials making up the blend, it is also possible to provide a blend which exhibits two or more distinct phase changes. In a crystalline polyolefin, three phase changes are observed, those of the two or more waxes, plus that of the polyolefin. Such a blend is useful in applications where the phase change material is relied upon to conserve heat in the winter and conserve cool in the summer. For this embodiment of the invention, the difference in the melting points of the phase change materials should be at least 10°C.

Further, in the present invention, the crystalline-to-amorphous phase change of the high density polyethylene can be preserved in the composite sheets or pellets, with however, the melting point of the HDPE lowered from 132°C to about 115°C. There is thus provided a dual temperature range thermal energy storage system in which the heat of fusion and crystallization of each component is expressed in proportion to their respective concentration in the composite.

Another embodiment of the present invention utilizes flame-resistant halogenated hydrocarbons as fire-retardant additives to the alkyl hydrocarbon phase change materials. Typical examples of flame resistant hydrocarbons are halogenated hydrocarbons, such as chlorinated or brominated hydrocarbons. Representative examples include Chlorowax 70, available from Diamond Shamrock and decabromodiphenylether, available from Ethyl Corp. These halogenated fire retardants can be used in admixture with conventional flame-resistant fillers such as antimony oxide or a blend of pentaerythritol and monoammonium phosphate, etc. The weight ratio of halogenated fire-retardant to filler may vary, but it is typically about 1:1 to 3:1.

Flame-resistant halogenated fire-retardant have previously been added to polymers to them self-extinguishing. Some of the fire retardant materials used for this purpose may also be as flame-resistant phase change materials by themselves in accordance with the present invention.

A particularly useful flame-resistant hydrocarbon is a brominated hydrocarbon. Only brominated hydrocarbons which are miscible in the change material are useful in the present invention. Miscibility is particularly important when permeating the flame-resistant hydrocarbons into the polyolefin along with the phase change material. An example of a commercially available brominated hydrocarbon which is miscible in the phase change material is dibromoethyldibromo cyclohexane which is available as Saytex BCL-462 from the Ethyl Corporation. It has been found that Saytex BCL-462 must be incorporated into the phase change material in a concentration of at least ten percent in order to provide a self-extinguishing product.

Another useful fire retardant is a halogenated phosphate. Particularly useful flame-resistant halogenated phosphates are chlorinated phosphates such as tri(beta-chloroisopropyl) phosphate which is commercially available under the designation FYROL PCF and tri(beta-chloroethyl)phosphate which is commercially available under the designation FYROL CEF, both from Stauffer Chemical Company, Specialty Chemical Division. Although insoluble in the phase change material, tri(beta-chloroisopropyl) phosphate can be dispersed in the phase chnage material.

In still another embodiment of the invention fatty acid esters such as stearates are used as phase change materials.

In some cases it may be desirable to include a filler such as finely divided silica or calcium sodium metaphosphate whiskers in the composite to prevent seepage of the phase change material. The filler may be used in an amount of about 10 to 50% or higher in some applications.

One example of a useful filler is silica such as Cab-o-sil, Hi-Sil, etc.

The cementitious composition of the present invention includes a cementitious material as a rigid matrix forming material. Typical examples of useful cementitious material are hydraulic cements, gypsum, plaster of Paris, lime, etc. Portland cement is by far the most widely used hydraulic cement. Portland cements are ordinarily used for construction purposes. Types I, II, III, IV, and V may be used. White cements, air entrained cements, high alumina cements, and masonry cements may also be used.

Concretes are mixtures of hydraulic cements and aggregates. Typical aggregates include conventional coarse aggregates, such as gravel, granite, limestone, quartz sieve, etc., as well as so-called fine aggregates, such as sand and fly ash. Conventional hydraulic cement concretes, for example, Portland cement concretes, employ major amounts, about 50-70% by volume of such aggregates in the set product. These cements and concretes fall within the term "cementitious material" as it is used herein.

The cementitious compositions of the present invention also include concrete and plaster compositions useful in the manufacture of pre-formed materials, such as concrete blocks, dry wall, and the like, as well as in forming poured concrete structures such as used in forming the walls, floors, floor pads, and partitions of buildings. In addition, the compositions of the present invention also incude compositions useful in roadway, runway, and bridge deck construction where icing may be prevented by incorporation of the phase change material for thermal energy storage during the day, and release during the night to prevent freezing of the water on the surface. The pellets of the present invention can also be incorporated into unfired clay bricks or other porous medium such as foams. The composites can also be used in voids in building spaces such as walls, floors, and the like.

The cementitious compositions of the present invention can be designed for use in various passive thermal storage applications by appropriately selecting the melting point of the alkyl hydrocarbons. Alkyl hydrocarbons which melt in the range of about 20-42°C are used in passive solar heating, such as in building materials and the structures previously mentioned. For bridge deck or roadway deicing, alkyl hydrocarbons which melt at about 5-15°C are preferably used.

A partial listing of building materials which may be modified to incorporate alkyl hydrocarbons as phase change materials in accordance with the present invention includes: concrete block, concrete brick, concrete slab, dry wall, and gypsum board. The amount of alkyl hydrocarbon-containing composite used in the cementitious or concrete materials is typically about 5 to 25% by weight. The amount will vary with the density of the concrete used. At least 5 weight percent is required for adequate storage capacity. In excess of 25% by weight pellet, usually reduces the strength characteristics of a product to a level at which it is less useful.

It has been found that in cementitious composites comprising phase change materials (PCMs) on the order of about 20 wt% and higher PCM, (based upon total composite weight) the composite, especially a plasterboard composite, can be ignited and will burn slowly until the PCM is exhausted. For concrete and other higher density cementitious products, lower percentages of PCM on a weight basis (e.g. 3% or greater) may be used. In order to retard flammability of these PCM containing cementitious composites, combinations of halogen donor compounds and antimony oxides have been dispersed within the cementitious composite. In order to facilitate incorporation of the flame retarding agents and the PCM into the cementitious matrix, initial emphasis was placed on finding a halogen donor flame retardant material that was soluble in the preferred crystalline straight chain alkyl hydrocarbon PCM material.

The ability of one compound to dissolve in another (in the absence of chemical reaction to produce a single new compound) is determined by the respective solubility parameter of the two materials. The solubility parameter is derived indirectly from the heat of vaporization, and is a measure of the intermolecular attraction of the molecules of a compound. The solubility parameter scale on which all materials can be located ranges from values of about five at the nonpolar end to about 20 at the polar end. The alkyl hydrocarbon PCMs are nonpolar and have a low solubility parameter of around 7.4 to about 7.8. Said more simply, "like dissolves in like." Thus, for a halogen donor to be soluble in our alkyl hydrocarbon PCM, it is necessary for it to be nonpolar (no polar chemically reactive groups), with a solubility parameter near that of the PCM (not higher than about 9.0 and not lower than about 6). I have found that in order to obtain solubility, the halogen donor must be aliphatic (not aromatic), low melting (i.e. below 100°C) and contain no polar chemically reactive groups. At present, the preferred soluble halogen donor flame retarding material is dibromoethyldibromo cyclohexane sold under the trademark "Saytex BCL-462 " by Ethyl Corp.

Other exemplary PCM soluble halogen donor flame retarding materials comprise "Bromochlor 50" and "Bromochlor 70" available from The Kiel Chemical Division of Ferro Corporation. The "Bromochlor 50" material comprises about 50% total halogen and is PCM soluble at room temperature whereas the Bromochlor 70 material comprises about 70% combined halogen and is soluble only at elevated temperatures.

Additionally, the following materials will be soluble in the crystalline straight-chain alkyl hydrocarbon PCM and will function as acceptable halogen donor flame retardants:
1-bromohexadecane
1-bromooctadecane
dibromohexadecane
dibromooctadecane

Differential scanning colorimeter tests on 1-bromohexadecane and 1-bromooctadecane reveal that both of these compounds melt and freeze at about the same temperature as the unmodified alkyl hydrocarbon PCMs and have useful thermal energy storage (i.e., heat of fusion and crystallization of greater tan 30 cal/g.) Accordingly, these materials look promising as potential inherently flame retarding PCM materials.

It is clearly preferred to utilize the PCM-PCM soluble halogen donor combination with a flame retarding polyvalent metal oxide filler such as an antimony oxide. Early attempts to percolate PCM, a PCM soluble halogen donor flame retarding agent, and antimony tri or pentoxide into a cementitious composite did not result in an acceptable flame retardant composite because the then available antimony oxide particles (specifically $Sb_2O_3$) were too large (i.e. 0.2-2.0 micron) and since the high specific gravity thereof caused the particles to settle out of the PCM containing medium even after being agitated. Additionally, the particles are largely strained out at the surfaces of the porous cementitious material. Further experimentation revealed that acceptable flame retarding composites could be formed from smaller particle size (i.e. ≦ 0.15 micron) antimony oxide materials. Studies revealed that the following antimony oxide materials can be successfully utilized:

      1. antimony trioxide, "ultrafine II" - Laurel Industries, particle size ≈ 0.15 microns
      2. antimony pentoxide, "ADP-480" -Nyacol Products, particle size ≈ 0.03 microns -preferred
      3. antimony pentoxide "ADP-494" - Nyacol Products, particle size ≈ 0.03 microns

ADP stands for antimony dispersible powder. The ADP 480 material is readily compatible with and disperses in nonpolar solvents such as the preferred crystalline straight chain alkyl hydrocarbon PCMs. The ADP 494 has a modified surface treatment that is more readily dispersed in polar solvents. ADP-480 has been successfully utilized in combination with a PCM soluble halogen donor in the simultaneous (one-bath) percolation of the PCM, ADP-480, -PCM soluble halogen donor flame retardant in a plasterboard matrix (as shown in Example 14 infra.) to form a self extinguishing PCM containing plasterboard material.

8

In addition to use of the PCM solution halogen donor flame retarding materials, halogenated phosphate esters such as tri(2-chloroisopropyl)phosphate "Fyrol PCF" - Stauffer and tri(2-chlorethyl) phosphate "Fyrol CEF" -Stauffer may also be incorporated into a PCM-cementitious composite to inhibit flammability. Of these two, the "Fyrol CEF" is more effective on a weight basis. These halogenated phosphate esters are insoluble in the crystalline alkyl straight chain PCM materials and do not require conjoint use of antimony oxides in order to obtain self extringuishing compositions at concentrations on the order of 20 wt.% (combined weight of PCM and flame retardant based upon total composite weight). When burned, they emit a low level of white smoke.

The PCM-flame retardant may be mixed together to form either a solution or mixture. The desired cementitious composite may then be percolated by the resulting solution or mixture by dipping it in or painting it with the flame retardant mixture or solution. As stated above, when the PCM soluble halogen donors are used as the desired flame retardant, a small particle size (i.e., $\leqq$ 0.15 micron) antimony oxide material is also mixed with the PCM and the flame retarding PCM soluble halogen donor retarding compound.

Suitable solutions or mixtures for percolating the flame retardant and PCM into the cementitious matrix include (based on 100 wt.% of the bath)

|  | % wt. |
|---|---|
| 1. PCM material | 95 to 70 |
| 2. Flame retardant PCM soluble halogen donor or the halogenated phosphate esters | 5 to 18 |
| 3. antimony oxide material (when present- present only when a PCM soluble halogen donor flame retardant is used). | 0 to 12 |

Preliminary experiments conducted with the use of percolation baths as above noted (wherein PCM, Flame, Retardant, and optional antimony oxide are all present in one bath -- simultaneous percolation) have indicated that the cementitious matrix material, here plasterboard, preferentially absorbs the flame retarding agent as opposed to the PCM material. This fact could lead to quality control problems in production of flame retardant PCM containing cementitious composites in that the flame retardant may penetrate preferentially into the matrix, thus retarding the desired PCM function of the composite. Accordingly, it is presently thought that the PCM and flame retardant should be sequentially percolated into the composite.

By "sequention percolation", I mean that the composite is first dipped, coated etc. with a liquid bath of the PCM material for a time sufficient to allow for substantially complete permeation of the PCM throughout the matrix. Based upon the weight of the resulting composite, it is desirable to uptake about 20 wt.% to 50 wt.% of the PCM into the composite. The matrix appears to dry almost instantaneously due to continued migration of the PCM into the matrix. Then, the thus-resulting PCM-cementitious matrix is immersed in or coated with a second bath containing either the desired halogenated phosphate ester flame retardant material or the PCM soluble halogen donor - antimony oxide combination for a time sufficient to allow incorporation of a flame retarding amount of the flame retardant into the matrix. Presently, it is thought that "sequential percolation" provides a superior PCM containing flame retardant composite in that the flame retardant is most probably concentrated along the outer layers of the composite where it can better supply its intended flame retarding function. From an economical viewpoint, use of the phosphate ester flame retarding system appears to be more cost effective. On the other hand, the soluble halogen donor-antimony oxide flame retarding system appears to achieve equal or better flame retarding efficacy.

In the second step of the "sequential percolation" process, the second bath may comprise 100% of the desired halogenated phosphate ester flame retardant or a mixture of PCM soluble halogen donor/antimony oxide provided in a ratio of abot 1:1 - 4:1, with a 2:1 ratio of PCM soluble halogen donor/antimony oxide material being preferred. It is desirable to incorporate a flame retarding amount of from about 5%-30% by weight of the flame retardant composition into the matrix per 100% wt of the combined PCM and flame retardant weight.

The present invention is more fully illustrated by the following non-limiting examples.

## Example 1

A procedure for silane grafting and crosslinking HDPE pellets is illustrated by the following example.

A charge of 2000g of Alathon 7040 HDPE (DuPont) pieces was added to a large Banbury mixer and fluxed 4 to 5 minutes at a temperature slightly above room temperature (no steam). A charge of 120g (6 phr, i.e. parts per hundred parts resin) vinyl triethoxy silane (Union Carbide A-151) containing 4g (0.2 phr) benzoyl peroxide was added and 5 minutes of mixing steam on (120 psi) began. At the end of this time, cooling water was turned on and approximately 4 pounds silane-grafted polyethylene cake removed from the Banbury after 2 minutes cooling time.

The grafted cake was next cold pressed into round flat disks which can readily be cut into strips via band-saw and then granulated into flakes or pieces suited for extrusion.

The silane-grafted flakes were co-extruded in a 95/5 (w/w) ratio with a catalyst batch (consisting of 100 parts Alathon 7040, 1 phr dibutyl tin dilaurate and 0.15 phr benzoyl peroxide prepared via mixing on a hot mill roll, and granulated into flakes) using a 1 inch (2.54 em) extruder (2 passes, all zones at 165°C) and chopped into pieces.

The silane-grafted HDPE pieces were crosslinked by heating in boiling water for about 24 hours, removed and air (or low-temperature) oven dried. A sample of crosslinked pieces heated in air at 200°C exhibited excellent form stability (no flow); the pieces did not stick to one another when cycled around the PE melting point in ethylene glycol several times.

## Example 2

Using the procedure of Example 1, polypropylene pellets were prepared by mixing polypropylene with vinyl triethoxy silane and benzoyl peroxide to produce silane grafted polypropylene which was coextruded with polypropylene containing dibutyl tin dilaurate, cut into pellets and crosslinked in hot water or steam.

## Example 3

Peroxide crosslinking of HDPE was performed as follows:

50 g of Alathon 7040 HDPE to be crosslinked was melted on the small steam-heated mill roll at ca. 150°C, dicumyl peroxide oil to 5% by weight was then added to the molten PE and milling continued only long enough to assure complete mixing. The PE sheet was removed from the mill roll and compression molded in an electrically heated press for 30 minutes at 170°C and 700 psi. The molded samples (generally 6" x 6" x 1/8") were then cooled slowly in the mold to room temperature and next cut into strips to be chopped into pellets (approximately 1/4" x 1/8" x 1/8"). The results are shown in Table 1.

Table 1

THERMAL PROPERTIES OF COMPRESSION MOLDED CROSSLINKED ALATHON 7040 HOPE RESIN

| Peroxide Crosslinking Agent | | Thermal Form-Stability[b] | |
|---|---|---|---|
| Name | Concentration (phr) | Pellets Flow on Melting | Pellets Stick Together on Melting |
| | | yes | yes(fused) |
| dicumyl peroxide | 0.25 | yes (v. slight) | yes(slightly) |
| dicumyl peroxide | 0.50 | no | no |
| dicumyl peroxide | 0.75 | no | yes(slightly) |
| dicumyl peroxide | 1.0 | no | yes(slightly) |
| Lupersol 101[a] | 0.5 | no | yes(slightly) |

[a]Tradename for 2,5 dimethyl-2,5-bis(t-butylperoxy) hexane (Lucidol Division, Pennwalt Corporation)

[b]Touching pellets heated in air to 200°C on Fisher-Johns m.p. apparatus

## Example 4

A second method used to produce crosslinked polyethylene composites was via extrusion of a peroxide-containing HPDE. Dicumyl peroxide was incorporated at room temperature via tumble-blending of the PE pellets with or without an inert diluent (mineral oil) containing the peroxide. Extrusion of pellets coated with peroxide was performed using a A C. W. Brabender single screw (3/4 in. screw size) extruder with 4 heated zones. Temperatures of the zones could be adjusted and also screw speed altered to vary throughput times. The extruded strand of crosslinked PE was chopped into pellets. Pellet sizes could be varied -- generally they were 1/4 in. (length) 1/4 in. (diameter) or less. Effects of crosslinking could be visually observed in the extruded stand depending on the degree of crosslinking as first a ballooning of the strand, secondly waviness in the strand and thirdly as a coarseness in the strand. The second condition was found to be the preferred extent of crosslinking. The results are shown in Table 2.

TABLE 2

THERMAL PROPERTIES OF EXTRUSION CROSSLINKED ALATHON 7040 HDPE

| Crosslinker Type | Concentration (phr) | Extruder Blending Cond. | Die Temp. $(C^{o})$ | Ext'd.Rod. Appearance | Pellets Flow on Melting |
|---|---|---|---|---|---|
|  | none | – | – | smooth | yes |
| Lupersol 101[a] | 0.5 | hot mill | 175 | spiral | no |
| Lupersol 101[a] | 0.5 | RT/wet | 145 | smooth | yes |
| Lupersol 101[a] | 0.5 | RT/wet | 165 | spiral | slightly |
| Lupersol 130[b] | 0.5 | hot mill | 180 | smooth | slightly |
| Lupersol 130 | 0.5 | hot mill | 200 | rough | v.slightly |
| Lupersol 130 | 0.5 | RT/wet | 175 | spiral | no |
| Lupersol 130 | 0.25 | RT/wet | 175 | spiral | no |

[a] 2,5 dimethyl-2,5, bis-(t-butyl peroxy) hexane (half-life = 24'/145°C).
[b] 2,5 dimethyl-2,5, bis-(t-butyl peroxy) hexane 3 (half-life = 18'/160°C). A product of Pennwalt Corp.

## Example 5

A process for electron beam irradiation of pellets is illustrated by the following example.

Fifteen thousand (15,000) pounds of DuPont 7040 HDPE pellets were selected for irradiation. The electron beam accelerating potential was maintained at three million volts and the electron beam current was maintained at 31.3 milliamperes with a traverse speed of 16 ft/min, and a pellet bed depth less than 0.25 inch during the irradiation processing. The radiation processing of the pellets was conducted in air. The electron beam processing of the HPDE pellets was conducted at radiation doses of 2, 4, 6, and 8 megarads. At each of the radiation dosage levels, the amount of pellets loaded onto the carts which carried the pellets through the electron beam was varied. The heaviest loading of pellets on the carts corresponded to an average pellet depth of approximately 0.37 inch, whereas the lightest loading corresponded to a single layer of pellets.

The thermal form stability of the irradiated pellets was investigated by maintaining the pellets in ethylene glycol at 150# Celsius for a 24-hour time interval. The melting point of the pellets is 133° Celsius. Hot pressed

11

samples (right circular cylinders) were prepared by compressing pellets at a pressure of 4,000 pounds per square inch for 30 minutes. These hot pressed samples were cooled under pressure in the die to room temperature. After reaching room temperature, the pressure was released and the samples were recovered in the form of right circular cylinders. These right circular cylinders, prepared from the irradiated HDPE pellets, were placed in the ethylene glycol bath and maintained at a temperature of 150° Celsius for a 24-hour time interval.

Initially, all of the irradiated pellets which were compressed into the right circular cylinders appeared to be fused solidly together. After the thermal heat treatment, the original shape of the pellets again is evident even for those pellets which had received a 2 megarad dose. Those pellets which had received a 4 megarad dose or higher showed less tendency to remain together and exhibited a pronounced tendency to recover their original pellet shape. This recovery of the original shape of the crosslinked pellets, is a manifestation of the memory effect which is observed in crosslinked polyethylene products and illustrates the thermal form stability of the irradiated pellets. As a result of these experiments, it is concluded that pellets which have received at least a four megarad dose have good thermal form stability.

## Example 6

The thermal form stability of HDPE pellets which traveled through an electron beam is illustrated by the following example.

The irradiation of 15,000 pounds of Marlex 6006 HDPE pellets with a dose of 6 megarads was conducted using an electron accelerating potential of three million volts and a beam current of 31.3 milliamperes with a traverse speed of 16 ft/min and a pellet bed depth of about 0.25 inch. These samples of pellets were tested for thermal form stability in an ethylene glycol bath as in Example 4. They exhibited excellent thermal form stability.

## Example 7

Gamma radiation of polyethylene powder is illustrated by the following examples.

Five 1 kg samples of Marlex 6006 polyethylene powder were irradiated with the following doses of gamma radiation. The dose rate was 679 krad/hour absorbed average.

| Sample # | Dose (mrad) |
|----------|-------------|
| 1 | 4.0 |
| 2 | 5.0 |
| 3 | 6.0 |
| 4 | 7.0 |
| 5 | 8.0 |

Each sample was purged with nitrogen by five $N_2$ pressure/vacuum cycles at ambient temperature.

## Example 8

The incorporation of the phase change material into the HDPE pellets is illustrated by the following examples.

The HDPEs were Marlex 6006 (Phillips) and Alathon 7040 (DuPont). The swelling experiments were conducted in two waxes -- Witco LLN and Witco 45A available from the Witco Corporation.

A small weighed quantity (10g) of the pellet with a specified level of irradiation was placed into a beaker containing a weighed quantity of melted wax. The beaker contained a magnetic stirrer but additional outside stirring may be necessary. After the desired temperature attained, the melted wax was allowed to soak into the HDPE for a desired time period. The product was then allowed to cool and was separated from the hot wax (still molten) by filtering through a 100-mesh wire screen. The swelled HDPE bead with a surface coating of wax was placed a beaker and washed 3 times with hot hexane and then filtered. The swelled beads were then spread on a paper kept overnight under a hood in order to evaporate the hexane.

Table 3 summarizes the data.

TABLE 3.

IRRADIATION CROSSLINKED MARLEX 6006 HDPE PELLETS, SWELLED IN HOT SOLUTIONS OF
WITCO NORMAL PARAFFINS.

| HDPE Irradiation Type and Dose | Paraffin Identify | Imbibing Time (hrs) | Imbibing Temperature ($^{o}$C) | Exp. Wt. of Paraffin Imbibed (%) | Calculated Wt. of Paraffin Imbibed from DSC (%) | Exp.-Calculated Wt. Difference (%) |
|---|---|---|---|---|---|---|
| 1. Electron Beam 6 m-rad, air | LLN | 1.0 | 120 | 35.8 | 19.3 | 16.5 |
| 2. Electron Beam 6 m-rad,air | 45-A | 3.0 | 130 | 60.4 | 58.4 | 2.0 |
| 3. Electron Beam 6 m-rad, air | 45-A | 0.5 | 175 | 61.1 | 44.8 | 16.3 |
| 4. Electron Beam 6 m-rad, air | 45-A | 1.0 | 175 | 72.6 | 63.4 | 9.2 |
| 5. Electron Beam 6-m-rad, air | 45-A | 2.0 | 175 | 79.0 | 71.4 | 7.6 |
| 6. Electron Beam 14 m-rad, air | LLN | 1.0 | 95 | 2.8 | Negative | — |
| 7. Electron Beam 14 m-rad, air | 45-A | 1.0 | 130 | 42.0 | 46.8 | 4.8 |
| 8, Electron Beam 14 m-rad, air | 45-A | 2.0 | 150 | 60.6 | 56.4 | 4.2 |
| 9. Electron Beam 14 m-rad, air | 45-A | 2.0 | 170 | 62.5 | 57.4 | 5.1 |
| 10. Electron Beam 14 m-rad, air | 45-A | 1.0 | 175 | 57.6 | 48.6 | 9.0 |
| 11. Electron Beam 14 m-rad, air | 45-A | 0.5 | 175 | 52.0 | 33.7 | 18.3 |

------------------

continuation of: TABLE 3.

IRRADIATION CROSSLINKED MARLEX 6006 HDPE PELLETS, SWELLED IN HOT SOLUTIONS OF
WITCO NORMAL PARAFFINS.

| HDPE Irradiation Type and Dose | Paraffin Identify | Imbibing Time (hrs) | Imbibing Temperature ($^{0}$C) | Exp. Wt. of Paraffin Imbibed (%) | Calculated Wt. of Paraffin Imbibed from DSC (%) | Exp.-Calculated Wt. Difference (%) |
|---|---|---|---|---|---|---|
| 12. Gamma 10 m-rad, air | LLN | 1.0 | 150 | 62.2 | 49.6 | 12.6 |
| 13. Gamma 6 m-rad, $N_2$ | 45-A | 1.0 | 150 | 75.0 | 62.0 | -13.0 |
| 14. Gamma 5 m-rad, $N_2$ | 45-A | 1.0 | 150 | 76.0 | 72.6 | 13.4 |
| 15. Gamma 4 m-rad, $N_2$ | 45-A | 1.0 | 150 | 78.3 | 80.1 | - |
| 16. Gamma 3 m-rad, $N_2$ | 45-A | 1.0 | 150 | Dissolves | - | - |
| 17. Gamma 2 m-rad, $N_2$ | 45-A | 1.0 | 150 | Dissolves | - | - |

## Example 9

In an effort to further increase the phase change material pickup, swelling experiments were conducted on lower dosage Marlex 6006 and Alathon 7040 pellets.

50 grams of the Witco 45A wax were heated to 150°C. The wax was stirred using a stirring bar. Five grams of HDPE pellets were added and the stirred mixture held to 150°C for 2 hours. The pellets were sieved from the hot wax and washed 3 times in methyl ethyl ketone at 50°C. The pellets were dried overnight in a vacuum and weighed. The results are indicated in Table 4.

14

Table 4

IRRADIATION CROSSLINKED MARLEX 6006 AND ALATHON 7040
HDPE PELLETS SWELLED IN HOT SOLUTIONS OF 45A WAX

| Material | Gamma Irrad. Dose m-rad in $N_2$ | Wax | Imbibing Time Hrs. | Imbibing Temp. °C | Wt. Wax Imbibed Chg in Wt. % |
|---|---|---|---|---|---|
| Marlex 6006 | 3 | 45A | 2 | 150 | 20.5*** |
| Alathon 7040 | 3 | 45A | 2 | 150 | * |
| Marlex 6006 | 4 | 45A | 2 | 150 | 79.2 |
| Alathon 7040 | 4 | 45A | 2 | 150 | * |
| Marlex 6006 | 5 | 45A | 2 | 150 | 78.2 |
| Alathon 7040 | 5 | 45A | 2 | 150 | ** |
| Marlex 6006 | 6 | 45A | 2 | 150 | 75.0 |
| Alathon 7040 | 6 | 45A | 2 | 150 | 66.9 |

*HDPE is soluble in the wax.

**HDPE/wax mixture formed a gel.

***Partially soluble in wax. The true value for the wax imbibed by the
HDPE pellet is probably approximately 80%.

## Example 10

Maqrlex 6006 HDPE pellets were crosslinked by electron beam irradiation at a dosage of 14 m-rad and swelled in Witco 45 A wax for 2 hours at 150°C. The pellets were incorporated into a concrete compositions and the compressive strength was measured. The results are shown in Table 5.

Table 5

| Com- pressive Sample Strength | Vol % Pellets | Vol % Concrete | |
|---|---|---|---|
| A | 17.5 | 82.5 | 1197 |
| B | 31.0 | 68.9 | 699 |
| Control | 0 | 100 | 1738 |

## Example 11

An uncrosslinked polypropylene composite was prepared by mixing polypropylene, Cab-O-Sil (silica), and LLN wax in a Banbury mixer in the amounts shown in Table 6.

Table 6

| Parts by Weight | | | |
|---|---|---|---|
| Polypropylene | 100 | 100 | 100 |
| Silica | 0 | 10 | 10 |
| Witco LLN Wax | 25 | 25 | 50 |

## Example 12

Approximately 100-125 gm of Witco 45A wax was placed in a beaker and heated to the temperature of interest. While the wax was being stirred with a magnetic stirrer, about 10 gm of crystalline polypropylene (CPP) added slowly. The mixture was stirred vigorously enough to prevent pellets from sticking to the sides of beaker.

Runs were made at various time lengths and temperatures. When the swelling was completed, the excess was poured off and the pellets were washed with warm pentane.

## Example 13

Composites were also obained by following the procedure of Example 8 but using Witco K-61 a product of Witco Corp. and NP-15 available from Exxon Corporation as the phase change material.

## Example 14 - Simultaneous Percolation of PCM, and Flame Retardant into Plasterboard

Four 2" x 2" squares of platerboard were cut and dried in a desiccator overnight. Five hundred grams of $C_{18}$ alkyl hydrocabon PCM were heated to 80°C under stirring. One hundred and ten grams of dibromoethyledibromo cyclohexane "Saytex BCL-462" followed by 55 grams of fine particle size $Sb_2O_5$ "Nyacol ADP-480" were added to the PCM material under constant stirring at 80°C. The suspension appeared stable. It was transferred to another beaker to observe any settled material. Very little material ( < 1.0g.) was observed at the bottom of the beaker. Weighed duplicate samples of the plasterboard materials were then percolated for 5 minutes and 10 minutes. Samples were taken out of the percolation bath, cooled and weighed.

The stable PCM/BCL-462/ADP-480 percoating bath had a composition of PCM/BCL-462/ADP-480 of approximately (75.2/16.5/8.2/). Plasterboard samples were ignited for time periods of five minutes and found to be immediately self-extinguishing when the flame was removed. There was very little smoke (white), and the flame did not travel along the plasterboard sample.

## Example 15 - Recommended Procedure for Sequential Percolation of PCM and Flame Retardant into Plasterboard

Plasterboard is first immersed in a bath containing 100% PCM at 80°C until the desired uptake of about 30 wt.% PCM, based on total weight of the plasterboard composite, is obtained. The thus obtained plasterboard impregnated with PCM is then immersed in a second bath containing "Saytex BCL-462" and "ADP-480" in a 2:1 ratio by weight for example for one to ten minutes, and self-extinguishing composites are obtained thereby.

## Example 16

"Fyrol CEF", tri(2-chloroethyl) phosphate was mechanically dispersed in liquid $C_{18}$ alkyl PCM material by use of a Waring blender. Various dispersions were prepared and then transferred to a 80°C percolation bath. The suspensions were maintained by continued mild agitation. Percolating bath compositions of C-18/"Fyrol CEF" of 75/25, 80/20, 85/15, 90/10, and 95/5 were tested. Fire-retardant compositions were obtained in all baths containing 15% wt. or higher "Fyrol CEF".

## Example 17

Plasterboard is first immersed in a bath containing 100% PCM at 80°C until the desired uptake of about 30 wt.% PCM, based on total weight of the plasterboard composite, is obtained. The thus obtained plasterboard impregnated with PCM is then immersed in a second bath containing 100% "Fyrol CEF" for one to ten minutes and self-extinguishing composites are obtained thereby.

**Claims**

1. Method of forming a flame retarding, phase change material composite structure from a cementitious matrix material comprising
forming a bath comprising a flame retarding agent and a phase change material, and contacting said matrix with said bath for a time sufficient to allow incorporation of at least about 3% by weight of said phase change material into said composite, based upon the resulting weight of said composite.

2. Method as recited in claim 1 wherein said bath comprises at least about 5% of said flame retardant.

3. Method as recited in claim 2 wherein said flame retardant is a member selected from the group consisting of soluble halogen donor compounds that are soluble in said phase change material and halogenated phosphate ester compounds.

4. Method as recited in claim 3 wherein said flame retardant material comprises a soluble halogen donor compound.

5. Method as recited in claim 4 further comprising adding an antimony oxide compound to said bath, said antimony oxide compound comprising small particles of about 0.15 microns or less.

6. Method as recited in claim 5 wherein said antimony oxide particles comprise a surface treatment thereon adapted to improve the stability of dispersions in non polar alkyl hydrocarbon PCM.

7. Method as recited in claim 5 wherein the weight ratio of soluble halogen donor compound to antimony oxide compound in said bath is about 1:1 - 4:1.

8. Method as recited in claim 4 wherein said flame retarding material comprises a halogenated phosphate ester.

9. Method as recited in claim 8 wherein said halogenated phosphate ester comprises tri(2-chloroisopropyl)phosphate or tri(2-chloroethyl)phosphate.

10. Method as recited in claim 7 wherein said soluble halogen donor compound comprises dibromoethyldibromocyclohexane.

11. Method of forming a flame retarding phase change material composite structure from a cementitious matrix comprising
forming a first bath comprising a phase change material, contacting said cementitious matrix with said first bath for a time sufficient to allow incorporation of at least about 3% by weight of said phase change material into said matrix, forming a second bath comprising a flame retarding agent selected from the group consisting of soluble halogen donor compounds that are soluble in said phase change material and halogenated phosphate ester compounds, and after contacting said matrix with said first bath, then contacting said matrix with said second bath.

12. Method as recited in claim 11 wherein said second bath comprises a soluble halogen donor compound, said second bath further comprising small particle size antimony oxide particles of about 0.15 microns or less.

13. Method as recited in claim 12 wherein said second bath comprises said soluble halogen donor compound and said small particle size antimony oxide in a weight ratio of about 1:1 to 4:1.

14. Method as recited in claim 13 wherein said phase change material comprises a crystalline straight chain alkyl hydrocarbon material having a heat of fusion of greater than about 30 cal./g.

15. Method as recited in claim 14 wherein said soluble halogen donor comprises dibromoethyldibromocyclohexane.

16. Method as recited in claim 11 wherein said flame retardant material comprises a halogenated phosphate ester material.

17. Method as recited in claim 16 wherein said halogenated phosphate ester comprises tri(2-chloroisopropyl)phospate or tri(2-chloroethyl)phosphate.

18. Composite material comprising in combination, a cementitious matrix, a phase change material dispersed throughout said matrix, and a flame retarding agent being disposed in said matrix.

17

| | **DOCUMENTS CONSIDERED TO BE RELEVANT** | | EP 89305366.0 |
|---|---|---|---|

| Category | Citation of document with indication, where appropriate, of relevant passages | Relevant to claim | CLASSIFICATION OF THE APPLICATION (Int. Cl.4) |
|---|---|---|---|
| P,X | US - A - 4 797 160 (SALYER) <br> * Totality * <br> -- | 1-4,8-11 | C 04 B 41/61 <br> C 04 B 41/71 <br> C 04 B 16/00 |
| X | US - A - 4 587 279 (SALYER et al.) <br> * Totality * <br> -- | 1,2,11 | |
| A | US - A - 4 617 332 (SALYER et al.) <br> * Totality * <br> ---- | 1,11 | |

TECHNICAL FIELDS SEARCHED (Int. Cl.4)

C 04 B

The present search report has been drawn up for all claims

| Place of search | Date of completion of the search | Examiner |
|---|---|---|
| VIENNA | 01-09-1989 | BECK |